# EUROPÄISCHE PATENTSCHRIFT

(11) **EP 3 526 087 B1**
(45) Veröffentlichungstag und Bekanntmachung des Hinweises auf die Patenterteilung: **15.07.2020**
(21) Anmeldenummer: 17769080.7
(22) Anmeldetag: 20.09.2017
(51) Int. Cl.: B60T 8/36, B60T 13/68, F16K 31/06, H01F 7/16

(54) **MAGNETVENTIL UND HYDRAULISCHES BREMSSYSTEM FÜR EIN FAHRZEUG**
SOLENOID VALVE AND HYDRAULIC BRAKING SYSTEM FOR A VEHICLE
ÉLECTROVANNE ET SYSTÈME DE FREINAGE HYDRAULIQUE POUR VÉHICULE

(30) Priorität: 13.10.2016 DE 102016219994
(43) Veröffentlichungstag der Anmeldung: 21.08.2019
(73) Patentinhaber: Robert Bosch GmbH, 70442 Stuttgart (DE)
(72) Erfinder: STAHR, Wolf, 74232 Abstatt (DE); GODBILLON, Pascal, 74074 Heilbronn (DE); AMBROSI, Massimiliano, 74232 Abstatt (DE); EISENLAUER, Michael, 71563 Affalterbach (DE); KURZ, Edgar, 74081 Heilbronn-Horkheim (DE); KRATZER, Dietmar, 71732 Tamm (DE)
(86) Internationale Anmeldenummer: PCT/EP2017/073738
(87) Internationale Veröffentlichungsnummer: WO 2018/069010

(56) Entgegenhaltungen:
- DE-A1-102004 048 861
- DE-A1-102014 003 381
- KR-A- 20010 046 079

## Beschreibung

Die Erfindung geht aus von einem Magnetventil für ein hydraulisches Bremssystem nach der Gattung des unabhängigen Patentanspruchs 1. Gegenstand der vorliegenden Erfindung ist auch ein hydraulisches Bremssystem für ein Fahrzeug mit einem solchen Magnetventil.

Aus dem Stand der Technik sind hydraulische Bremssysteme für Fahrzeuge mit einem Hauptbremszylinder, einer Hydraulikeinheit und mehreren Radbremsen bekannt, die verschiedene Sicherheitssysteme, wie beispielsweise ein Antiblockiersystem (ABS), elektronisches Stabilitätsprogramm (ESP) usw. umfassen, und verschiedene Sicherheitsfunktionen, wie beispielsweise eine Antiblockierfunktion, eine Antriebsschlupfregelung (ASR) usw. ausführen können. Über die Hydraulikeinheit können Steuer- und/oder Regelvorgänge im Antiblockiersystem (ABS) oder im Antriebsschlupfregelsystem (ASR-System) oder im elektronischen Stabilitätsprogrammsystem (ESP-System) für den Druckaufbau bzw. Druckabbau in den korrespondierenden Radbremsen durchgeführt werden. Zur Durchführung der Steuer- und/oder Regelvorgänge umfasst die Hydraulikeinheit Magnetventile, welche aufgrund der gegensätzlich wirkenden Kräfte "Magnetkraft", "Federkraft" und "Hydraulikkraft" meist in eindeutigen Positionen gehalten werden. Dementsprechend gibt es die Ventilarten "stromlos offen" und "stromlos geschlossen". Diese Magnetventile umfassen jeweils eine Magnetbaugruppe und eine Ventilpatrone, welche einen Polkern, eine mit dem Polkern verbundene Führungshülse, einen innerhalb der Führungshülse gegen die Kraft einer Rückstellfeder zwischen einer Geschlossenposition und einer Offenposition axial beweglich geführten Anker mit einem Stößel und einem Schließelement und einen mit der Führungshülse verbundene Ventilhülse mit einem Ventilsitz umfasst. Durch die Bestromung der Magnetbaugruppe wird eine Magnetkraft erzeugt, welche den Anker mit dem Stößel und dem Schließelement bei einem unbestromt offenen Magnetventil von der Offenstellung in die Geschlossenstellung bewegt bis das Schließelement auf den korrespondierenden Ventilsitz trifft und diesen abdichtet. Im unbestromten Zustand bewegt die Rückstellfeder den Anker mit dem Stößel und dem Schließelement und das Schließelement hebt vom Ventilsitz ab und gibt diesen frei. Bei einem unbestromt geschlossenen Magnetventil wird der Anker mit dem Stößel und dem Schließelement durch die Bestromung der Magnetbaugruppe von der Geschlossenstellung in die Offenstellung bewegt und das Schließelement hebt aus dem Ventilsitz ab und gibt diesen frei. Wird der Strom abgeschaltet, dann bewegt die Rückstellfeder den Magnetanker mit dem Schließelement in Richtung Ventilsitz bis das Schließelement auf den Ventilsitz trifft und diesen abdichtet. Mit dieser Bestromung geht Energieverbrauch einher, der unerwünscht ist. Darüber hinaus ist die Funktionssicherheit bzw. Funktionsverfügbarkeit nicht im erwünschten Umfang gegeben, wenn die Funktion nur über aktive Bestromung erreicht wird.

DE 10 2004 048861 A1 offenbart ein elektromagnetisch betätigbares Ventil für Bremskraftanlagen in Kraftfahrzeugen, mit einem hydraulischen und einem elektrischen Teil. Der hydraulische Teil weist ein Ventilelement auf, in dem eine mit der Zulaufbohrung kommunizierende Querbohrung ausgebildet ist und im Ventilelement sind mehrere mit der Ablaufbohrung verbundene Längsbohrungen ausgebildet. Die Verbindung der Querbohrung und der Längsbohrungen erfolgt über ein Schließglied. Das Ventil ermöglicht ein gesteuertes Öffnen bzw. Schließen des Schließgliedes, sodass ein geräuscharmes Schalten des Ventils ermöglicht wird.

In der Offenlegungsschrift DE 10 2007 051 557 A1 wird beispielsweise ein stromlos geschlossenes Magnetventil für eine schlupfgeregelte, hydraulische Fahrzeugbremsanlage beschrieben. Das Magnetventil umfasst einen auch als Ventilpatrone bezeichneten hydraulischen Teil, welcher teilweise in einer abgestuften Bohrung eines Ventilblocks angeordnet ist, und einen elektrischen Teil, welcher im Wesentlichen aus einer Magnetbaugruppe gebildet ist, welche auf den aus dem Ventilblock ragenden Teil der Ventilpatrone aufgesteckt ist. Die Magnetbaugruppe umfasst einen Spulenkörper mit einer elektrischen Wicklung, einen magnetflussleitenden Spulenmantel und eine magnetflussleitende Ringscheibe. Der hydraulische Teil weist eine Führungshülse auf, welche an ihrem dem elektrischen Teil zugewandten Ende mit einem eingepressten und fluiddicht verschweißten Polkern verschlossen ist. In der Führungshülse ist ein längsverschiebbarer Anker aufgenommen, welcher mit einer Rückstellfeder am Polkern abgestützt ist. Polkernabgewandt weist der Anker einen in einer Vertiefung angeordneten kugelförmigen Schließkörper auf. Am polkernabgewandten Ende ist in die Führungshülse eine topfförmige Ventilhülse mit einem zylindrischen Mantel und einem Boden eingepresst. Die Ventilhülse weist am Boden einen Durchgang sowie einen hohlkegelförmigen Ventilsitz auf, welcher mit dem Schließkörper ein Sitzventil ausbildet. Mit dem Sitzventil ist eine Fluidverbindung zwischen dem

Durchgang am Boden der Ventilhülse und mindestens einem Durchgang im Mantel der Ventilhülse schaltbar ausgeführt. Zudem ist außen am Mantel der Ventilhülse ein Radialfilter angeordnet, um Schmutzpartikel aus der Fluidströmung zu filtern. Die Führungshülse kann mittels einer Befestigungsbuchse in der Stufenbohrung des Ventilblocks verstemmt werden.

Aus der EP 0 073 886 B1 ist ein hydraulisches Steuergerät mit einem axial in mehrere Schaltstellungen verschiebbaren und mittels einer Rückstellfeder selbsttätig in eine seiner Schaltstellungen zurückgehenden Steuerschieber bekannt, welcher außerhalb dieser Schaltstellung durch eine in Raststellen eingreifendes federbelastete Raste festlegbar ist, welche ferner durch ein als Kolben in einer Gehäusebohrung geführtes und über einen angrenzenden Ringraum mit Druckflüssigkeit beaufschlagbares Teil hydraulisch betätigbar ist. Der Ringraum steht über ein Vorsteuerventil mit der zum Verbraucher führenden Pumpendruckleitung in Verbindung, welche bei Abschaltung des bzw. der Verbraucher druckentlastet ist. Hierbei ist der hydraulische Stellweg der Raste gegenüber ihrem gegen Federkraft möglichen Stellweg begrenzt und die Raststellen am Steuerschieber zum Ein- bzw. Hintergreifen der Raste sind radial so bemessen, dass ein hydraulisches Auslösen der Raste unabhängig von dem gegen Federkraft möglichen Stellweg nur an den dafür vorgesehenen Raststellungen möglich ist.

### Offenbarung der Erfindung

Das Magnetventil für ein hydraulisches Bremssystem mit den Merkmalen des unabhängigen Patentanspruchs 1 hat den Vorteil, dass in einem Magnetventil mit einem stromlosen ersten Betriebszustand ein weiterer stromloser zweiter Betriebszustand umgesetzt werden kann. Das bedeutet, dass Ausführungsformen der vorliegenden Erfindung ein bistabiles Magnetventil zur Verfügung stellen, welches durch Anlegen eines Umschaltsignals zwischen den beiden Betriebszuständen umgeschaltet werden kann, wobei das Magnetventil dauerhaft bis zum nächsten Umschaltsignal im jeweiligen Betriebszustand verbleibt. Hierbei kann der erste Betriebszustand einer Geschlossenstellung des Magnetventils und der zweite Betriebszustand kann einer Offenstellung des Magnetventils entsprechen. Der Wechsel zwischen den beiden Betriebszuständen kann beispielsweise durch kurze Bestromung des aktiven Stellglieds der Magnetbaugruppe bzw. durch Anlegen eines Umschaltsignals bzw. Stromimpulses an die Magnetbaugruppe durchgeführt werden. Mit einer solchen kurzen Bestromung kann der Energieverbrauch im Vergleich mit einem herkömmlichen Magnetventil mit zwei Betriebszuständen in vorteilhafter Weise reduziert werden, welches nur einen stromlosen ersten Betriebszustand aufweist und zur Umsetzung des bestromten zweiten Betriebszustandes für die Dauer des zweiten Betriebszustandes bestromt werden muss. Darüber hinaus ist die Funktionssicherheit bzw. Funktionsverfügbarkeit im Gegensatz zu Ausführungsformen der vorliegenden Erfindung nicht im erwünschten Umfang gegeben, wenn die Funktion nur über aktive Bestromung erreicht werden kann.

Da der Durchfluss bei geöffnetem Ventil so groß sein muss, dass die üblichen ESP-Funktionen und/oder ABS-Funktionen und/oder ASR-Funktionen des hydraulischen Bremssystems nicht behindert werden, führt dies zu einem verhältnismäßig großen Dichtdurchmesser des Ventilsitzes, also zu einer großen druckbeaufschlagten Fläche. Daher ist zum Öffnen des unter Druck stehenden bistabilen Magnetventils eine große Magnetkraft erforderlich. In vorteilhafter Weise wird die zum Öffnen des unter Druck stehenden Magnetventils erforderliche Kraft durch die Einführung des zweiteiligen Ventilankers mit Tauchstufenwirkung deutlich reduziert und die zu Verfügung stehende Magnetkraft deutlich gesteigert. Der in der Radbremse eingesperrte Druck wirkt sitzschließend, das bedeutet, dass der Druck das Schließelement in den Ventilsitz presst. Da systembedingt eine hohe Anforderung an die Dichtheit des bistabilen Magnetventils gestellt wird, kann am Schließelement ein zusätzliches Dichtelement vorgesehen werden, welches beispielsweise als O-Ring-Dichtung ausgeführt ist.

Ausführungsformen der vorliegenden Erfindung stellen ein Magnetventil für ein hydraulisches Bremssystem, mit einer Magnetbaugruppe, einem Polkern, einer mit dem Polkern verbundenen Führungshülse, einem innerhalb der Führungshülse axial beweglich geführten Ventilanker, welcher von einer durch die Magnetbaugruppe erzeugten Magnetkraft gegen die Kraft einer Rückstellfeder oder durch die Kraft der Rückstellfeder antreibbar ist und einen Stößel mit einem Schließelement axial bewegt, und einem mit der Führungshülse verbundenen Ventilkörper mit einem Ventilsitz zur Verfügung, welcher zwischen mindestens einer ersten Strömungsöffnung und mindestens einer zweiten Strömungsöffnung angeordnet ist. Hierbei ist der Ventilanker oder der Stößel in mindestens einer Durchgangsöffnung einer Führungsbaugruppe axial geführt, wobei zwischen der Führungsbaugruppe und dem Ventilanker oder dem Stößel eine mechanische Rastvorrichtung ausgebildet ist, welche den Ventilanker oder den Stößel in einer stromlosen Geschlossenstellung freigibt, so dass die Rückstellfeder den Ventilanker antreibt und das Schließelement zur Ausführung einer Dichtfunktion dichtend in den Ventilsitz drückt, und den Ventilanker oder den Stößel in einer stromlosen Offenstellung gegen die Kraft der Rückstellfeder in einer axialen Raststellung so festlegt, dass das Schließelement vom Ventilsitz abgehoben ist. Zudem umfasst der Ventilanker einen Hauptstufenanker mit einer druckbeaufschlagten ersten Fläche und einen Vorstufenanker mit einer kleineren druckbeaufschlagten zweiten Fläche, welcher axial beweglich im Hauptstufenanker gelagert ist und über ein Vorstufenschließelement mit einem Vorstufensitz zusammenwirkt. In der stromlosen Geschlossenstellung ist die Fluidströmung zwischen der mindestens einen ersten Strömungsöffnung und der mindestens einen zweiten Strömungsöffnung unterbrochen und in der stromlosen Offenstellung wird die Fluidströmung zwischen der mindestens einen ersten Strömungsöffnung und der mindestens einen zweiten Strömungsöffnung ermöglicht.

Ausführungsformen des erfindungsgemäßen Magnetventils weisen in vorteilhafter Weise eine sehr geringe Leckage in der Geschlossenstellung und einen geringen Energieverbrauch in der Offenstellung auf.

Das hydraulische Bremssystem für ein Fahrzeug mit den Merkmalen des unabhängigen Patentanspruchs 14 hat den Vorteil, dass mit geringem Zusatzaufwand an einer meist vorhandenen Hydraulikeinheit mit ESP-Funktionalität eine Zusatzfunktion realisiert werden kann, welche einen aktuellen Bremsdruck in der korrespondierenden Radbremse elektro-hydraulisch einschließen und bei geringem Energiebedarf über einen längeren Zeitraum halten kann. Das bedeutet, dass die vorhandene Druckversorgung, die Rohrleitungen von der Hydraulikeinheit bis zu den Radbremsen sowie Sensor- und Kommunikationssignale nicht nur für die ESP-Funktion und/oder ABS-Funktion und/oder ASR-Funktion sondern auch für eine elektro-hydraulische Druckhaltefunktion in den Radbremsen verwendet werden können. Dadurch können in vorteilhafter Weise Kosten, Bauraum, Gewicht und Verkabelung mit dem positiven Effekt eingespart werden, dass sich die Komplexität des Bremssystems reduziert.

Durch die in den abhängigen Ansprüchen aufgeführten Maßnahmen und Weiterbildungen sind vorteilhafte Verbesserungen des im unabhängigen Patentanspruch 1 angegebenen Magnetventils für ein hydraulisches Bremssystem möglich.

Besonders vorteilhaft ist, dass der Ventilkörper einen Aufnahmebereich aufweisen kann, welcher die Führungsbaugruppe zumindest teilweise aufnehmen kann. Hierbei kann die Führungsbaugruppe drehbeweglich oder drehfest im Aufnahmebereich des Ventilkörpers gelagert werden. Vorzugweise kann die mechanische Rastvorrichtung als Drehnockenmechanismus ausgeführt werden, welcher eine Umfangskraftkomponente nutzt, um eine Drehstellung zwischen dem Ventilanker oder dem Stößel mit Schließelement und der Führungsbaugruppe zu verändern und den Ventilanker oder den Stößel mit Schließelement axial in die Raststellung hinein und wieder heraus zu bewegen, so dass der Ventilanker oder der Stößel mit dem Schließelement durch Anlegen eines Umschaltsignals bzw. Stromimpulses an die Magnetbaugruppe einfach zwischen den beiden stromlosen Stellungen wechseln kann. Ausgehend von der stromlosen Geschlossenstellung kann der Ventilanker oder der Stößel mit dem Schließelement durch Anlegen eines Umschaltsignals von der stromlosen Geschlossenstellung in die stromlose Offenstellung wechseln. Bei Anlegen eines nachfolgenden Umschaltsignals wechselt der Ventilanker oder der Stößel mit dem Schließelement zurück von der stromlosen Offenstellung in die stromlose Geschlossenstellung. Ausgehend von der stromlosen Offenstellung kann der Ventilanker oder der Stößel mit dem Schließelement durch Anlegen eines Umschaltsignals von der stromlosen Offenstellung in die stromlose Geschlossenstellung wechseln. Bei Anlegen eines nachfolgenden Umschaltsignals wechselt der Ventilanker oder der Stößel mit dem Schließelement zurück von der stromlosen Geschlossenstellung in die stromlose Offenstellung. In Abhängigkeit der zu überwindenden Reibung kann sich bei der Axialbewegung des Ventilankers oder des Stößels die Führungsbaugruppe relativ zum Ventilanker oder Stößel drehen und/oder der Ventilanker oder der Stößel kann sich relativ zur angeordneten Führungsbaugruppe drehen. Um gezielt nur die Bewegung einer Baugruppe zuzulassen kann die Führungsbaugruppe drehfest im Ventilkörper befestigt werden, oder der Ventilanker kann über einen Formschluss mit der Führungshülse oder dem Polkern mit einem Verdrehschutz ausgeführt werden, oder der Stößel kann über einen Formschluss mit dem Ventilanker mit einem Verdrehschutz ausgeführt werden.

In vorteilhafter Ausgestaltung des Magnetventils kann die Rückstellfeder zwischen dem Vorstufenanker und dem Polkern wirken. Optional kann eine Hauptstufenfeder den Hauptstufenanker in Richtung Polkern bewegen, deren Federkraft kleiner als die Federkraft der Rückstellfeder gewählt ist. Die Hauptstufenfeder hebt den Hauptstufenanker an, wenn der Vorstufenanker bereits geöffnet und somit ein Druckausgleich hergestellt ist. Daher können der Luftspalt zum Polkern hin und somit auch der Magnetkraftbedarf verringert werden.

In weiterer vorteilhafter Ausgestaltung des Magnetventils kann ein Grundkörper des Stößels eine Durchgangsöffnung aufweisen, welche die beiden Enden des Grundkörpers fluidisch miteinander verbindet. Hierbei ist an einem dem Polkern zugewandten Ende der Vorstufensitz und an einem dem Ventilsitz zugewandten Ende das Schließelement angeordnet. Um in der geöffneten Position möglichst viel Durchfluss erreichen zu können, weist der Ventilsitz einen wesentlich größeren ersten Dichtdurchmesser als der Vorstufensitz auf. Vor allem dann, wenn zur Erreichung einer guten Dichtheit am Schließkörper eine zusätzliche Elastomerdichtung verwendet wird. Der oben beschriebene in den Radbremsen eingesperrte Druck steht überall im Magnetventil oberhalb des Hauptstufendichtdurchmessers an. Der Vorstufensitz am oberen Ende des in den Hauptstufenanker eingeführten Stößels ist über die Durchgangsöffnung im Stößel, welche beispielsweise als Kanal oder Bohrung ausgeführt ist, an die hydraulisch drucklose Seite angebunden. Da diese Durchgangsöffnung lediglich der Druckentlastung beim Öffnen der Vorstufe dient und kein großer Fluiddurchfluss erforderlich ist, kann ein zweiter Dichtdurchmesser des Vorstufensitzes wesentlich kleiner ausgeführt werden. Als Vorstufenschließelement kann beispielsweise eine in den Vorstufenanker eingepresste Kugel verwendet werden. Die Einführung der hier vorgeschlagenen Vorstufe bringt zwar eine zusätzliche Leckagestelle, jedoch ist die vergleichsweise kurze Dichtlinie wenig anfällig für Leckage. Um die Dichtheit zu optimieren und den unterschiedlichen Belastungen und Funktionen am Stößel Rechnung zu tragen, kann der Stößel als Zweikomponentenspritzgussteil hergestellt werden. Hierbei kann der Grundkörper des Stößels am unteren Ende im Bereich des Schließkörpers zur Aufnahme der größeren Axialkräfte beispielsweise aus kohlefasergefülltem PEEK-Kunststoff und am oberen Ende im Bereich des Vorstufensitzes aus unverstärktem PEEK-Kunststoff mit größerer Elastizität hergestellt werden. Alternativ kann der Stößel durch Pulver-Injection-Moulding (PIM) oder Ceramic-Injection-Moulding (CIM) oder Metal-Injection-Moulding (MIM) usw. oder durch 3D-Drucken hergestellt werden. Zudem kann der Stößel an seiner Spitze einteilig als Schließelement für den Ventilsitz ausgeführt werden. Alternativ kann der Stößel mehrteilig ausgeführt werden und beispielsweise ein zusätzliches Dichtelement, wie beispielsweise eine O-Ring-Dichtung, aufweisen, welches im Bereich des Schließelements angeordnet ist und die Dichtwirkung in der Geschlossenstellung verbessert. Der Stößel kann beispielsweise in eine entsprechende Aufnahme im Grundkörper des Ventilankers eingepresst werden.

In weiterer vorteilhafter Ausgestaltung des Magnetventils kann zwischen dem Vorstufenanker und dem Hauptstufenanker eine Druckausgleichsnut ausgebildet werden. Diese Druckausgleichsnut kann entweder nur in den Hauptstufenanker oder nur in den Vorstufenanker oder sowohl in den Hauptstufenanker als auch in den Vorstufenanker eingebracht werden. Die Druckausgleichsnut ermöglicht einen Druckausgleich zwischen der Hydraulik vor und nach dem Ventilsitz, wenn nur der Vorstufensitz geöffnet ist. Der im Hauptanker geführte Bereich des Vorstufenankers ist so hoch ausgeführt, dass er auch bei einer maximalen Relativbewegung noch innerhalb der zugehörigen Vertiefung des Hauptstufenankers geführt ist. Das bedeutet, dass der Vorstufenanker unabhängig vom Ankerhub in der Vertiefung des Hauptstufenankers geführt ist. Dadurch kann die Magnetkraft in vorteilhafter Weise gesteigert werden. Zudem kann der Vorstufenanker magnetisch vom Hauptstufenanker isoliert werden, beispielsweise durch eine Beschichtung oder ein Zusatzbauteil.

In weiterer vorteilhafter Ausgestaltung des Magnetventils kann die Führungsbaugruppe einen Steuerkäfig, welcher eine erste Durchgangsöffnung und eine erste Führungsgeometrie aufweist, und einen Steuerring umfassen, welcher eine zweite Durchgangsöffnung und eine zweite Führungsgeometrie aufweist. Der Steuerkäfig und der Steuerring können beispielsweise jeweils als Einzelteil ausgeführt werden. Diese Einzelteile können beispielsweise als Kunststoffteile in einem Spritzgussverfahren hergestellt werden. Alternativ können die Kunststoffteile durch Pulver-Injection-Moulding (PIM) oder Ceramic-Injection-Moulding (CIM) oder Metal-Injection-Moulding (MIM) usw. oder durch 3D-Drucken hergestellt werden. Zudem kann der Steuerring als Blechteil in einem Stanzbiegeprozess hergestellt werden. Durch die mehrteilige Ausführung der Führungsbaugruppe als Kunststoffteile können die komplexen Führungsgeometrien einfach und kostengünstig als Massenteile hergestellt und anschließend miteinander gefügt werden. Der Steuerkäfig und der Steuerring können drehfest miteinander verbunden werden, wobei der Steuerring in den Steuerkäfig eingeführt und mindestens eine am Steuerring ausgebildete Positionierungsnase in eine korrespondierende am Steuerkäfig ausgebildete Positionierungsaussparung gefügt werden kann. Alternativ kann die Führungsbaugruppe mit Steuerkäfig und Steuerring einteilig, beispielsweise als Zweikomponentenkunststoffspritzgussteil ausgeführt werden. Zudem kann der Ventilanker oder der Stößel an einem in der mindestens einen Durchgangsöffnung der Führungsbaugruppe geführten Abschnitt eine dritte Führungsgeometrie aufweisen, welche bei einer axialen Bewegung des Ventilankers in Richtung Polkern mit der ersten Führungsgeometrie des Steuerkäfigs und bei einer axialen Bewegung des Ventilankers in Richtung Ventilsitz mit der zweiten Führungsgeometrie des Steuerrings zusammenwirkt und eine Drehbewegung des Ventilankers oder des Stößels und/oder der Führungsbaugruppe um eine gemeinsame Längsachse erzeugt.

Aufgrund der Anforderung der magnetischen Leitfähigkeit wird der Ventilanker aus einem magnetisch leitfähigen Werkstoff beispielsweise im Kaltschlagverfahren oder spanend hergestellt. Der Polkern ist ebenfalls aus einem magnetisch leitfähigen Werkstoff hergestellt.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische perspektivische Schnittdarstellung eines Ausführungsbeispiels eines erfindungsgemäßen Magnetventils in seiner stromlosen Geschlossenstellung.
Fig. 2 zeigt eine schematische Schnittdarstellung eines Details des Magnetventils aus Fig. 1.
Fig. 3 zeigt eine schematische perspektivische Schnittdarstellung des Magnetventils aus Fig. 1 im bestromten Zustand mit geöffnetem Vorstufensitz.
Fig. 4 zeigt eine schematische perspektivische Schnittdarstellung des Magnetventils aus Fig. 1 im bestromten Zustand mit geöffnetem Ventilsitz.
Fig. 5 zeigt eine schematische perspektivische Schnittdarstellung des erfindungsgemäßen Magnetventils aus Fig. 1 in seiner stromlosen Offenstellung.
Fig. 6 zeigt eine schematische perspektivische Schnittdarstellung eines weiteren Ausführungsbeispiels eines erfindungsgemäßen Magnetventils in seiner stromlosen Geschlossenstellung.
Fig. 7 zeigt einen schematischen Hydraulikschaltplan eines Ausführungsbeispiels eines erfindungsgemäßen hydraulischen Bremssystems für ein Fahrzeug.

### Ausführungsformen der Erfindung

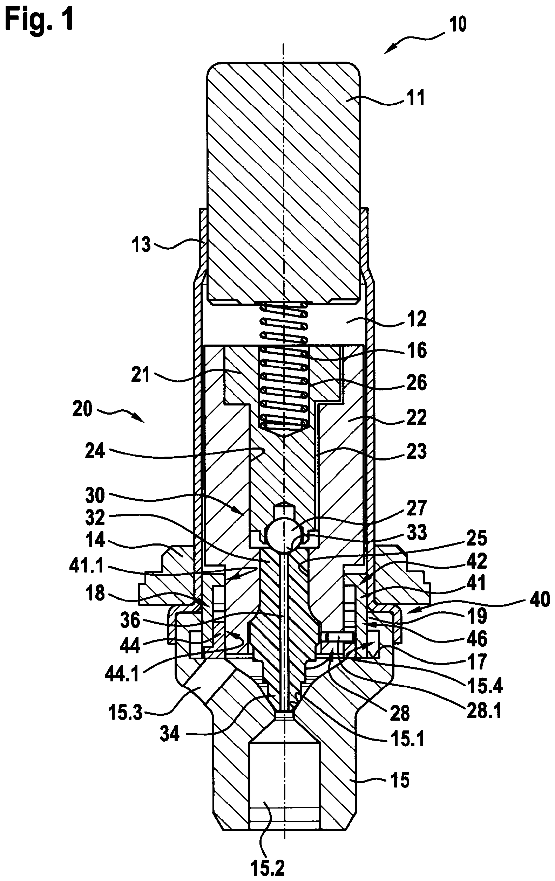

Wie aus Fig. 1 bis 6 ersichtlich ist, umfasst die dargestellten Ausführungsbeispiele eines erfindungsgemäßen Magnetventils 10, 10A für ein hydraulisches Bremssystem 1 jeweils eine nicht näher dargestellte Magnetbaugruppe, einen Polkern 11, eine mit dem Polkern 11 verbundene Führungshülse 13, einen innerhalb der Führungshülse 13 axial beweglich geführten Ventilanker 20, 20A, welcher von einer durch die Magnetbaugruppe erzeugten Magnetkraft gegen die Kraft einer Rückstellfeder 16 oder durch die Kraft der Rückstellfeder 16 antreibbar ist und einen Stößel 30 mit einem Schließelement 34 axial bewegt, und einen mit der Führungshülse 13 verbundenen Ventilkörper 15 mit einem Ventilsitz 15.1, welcher zwischen mindestens einer ersten Strömungsöffnung 15.2 und mindestens einer zweiten Strömungsöffnung 15.3 angeordnet ist. Hierbei ist der Ventilanker 20, 20A oder der Stößel 30 in mindestens einer Durchgangsöffnung 41.1, 44.1 einer Führungsbaugruppe 40 axial geführt. Zwischen der Führungsbaugruppe 40 und dem Ventilanker 20, 20A oder dem Stößel 30 ist eine mechanische Rastvorrichtung 18 ausgebildet, welche den Ventilanker 20, 20A oder den Stößel 30 in einer stromlosen Geschlossenstellung freigibt, so dass die Rückstellfeder 16 den Ventilanker 20, 20A antreibt und das Schließelement 34 zur Ausführung einer Dichtfunktion dichtend in den Ventilsitz 15.1 drückt, und den Ventilanker 20, 20A oder den Stößel 30 in einer stromlosen Offenstellung gegen die Kraft der Rückstellfeder 16 in einer axialen Raststellung so festlegt, dass das Schließelement 34 vom Ventilsitz 15.1 abgehoben ist. Zudem umfasst der Ventilanker 20, 20A einen Hauptstufenanker 22, 22A mit einer druckbeaufschlagten ersten Fläche und einen Vorstufenanker 21 mit einer kleineren druckbeaufschlagten zweiten Fläche, welcher axial beweglich im Hauptstufenanker 22, 22A gelagert ist und über ein Vorstufenschließelement 27 mit einem Vorstufensitz 33 zusammenwirkt. Dadurch wird ein bistabiles Magnetventil 10, 10A umgesetzt, welches durch Anlegen eines Umschaltsignals zwischen den beiden Stellungen umgeschaltet werden kann, wobei das Magnetventil 10, 10A dauerhaft bis zum nächsten Umschaltsignal im jeweiligen Betriebszustand verbleibt.

Ein solches bistabiles Magnetventil 10, 10A kann beispielsweise in einem hydraulischen Bremssystem 1 für ein Fahrzeug eingesetzt werden.

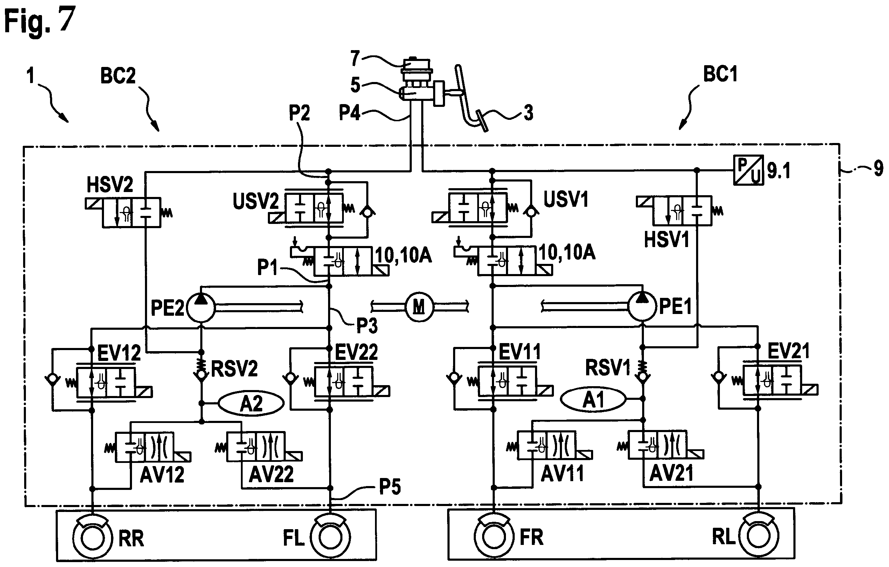

Wie aus Fig. 7 ersichtlich ist, umfasst das dargestellte Ausführungsbeispiel eines erfindungsgemäßen hydraulischen Bremssystems 1 für ein Fahrzeug, mit welchem verschiedene Sicherheitsfunktionen ausgeführt werden können, einen Hauptbremszylinder 5, eine Hydraulikeinheit 9 und mehrere Radbremsen RR, FL, FR, RL. Die Hydraulikeinheit 9 umfasst mindestens zwei Bremskreise BC1, BC2 zur Bremsdruckmodulation in den Radbremsen RR, FL, FR, RL. Hierbei weisen die mindestens zwei Bremskreise BC1, BC2 jeweils ein bistabiles Magnetventil 10, 10A auf, welches eine stromlose Geschlossenstellung und eine stromlose Offenstellung aufweist und zwischen den beiden Stellungen umschaltbar ist, wobei das bistabile Magnetventil 10, 10A in der stromlosen Offenstellung die Bremsdruckmodulation in mindestens einer zugeordneten Radbremse RR, FL, FR, RL freigibt und in der stromlosen Geschlossenstellung einen aktuellen Bremsdruck in der mindestens einen zugeordneten Radbremse RR, FL, FR, RL einschließt.

Wie aus Fig. 7 weiter ersichtlich ist, umfasst das dargestellte Ausführungsbeispiel des hydraulischen Bremssystems 1 zwei Bremskreise BC1, BC2, welchen jeweils zwei der vier Radbremsen RR, FL, FR, RL zugeordnet sind. So sind eine erste Radbremse FR, welche beispielsweise an einer Fahrzeugvorderachse an der rechten Seite angeordnet ist, und eine zweite Radbremse RL, welche beispielsweise an einer Fahrzeughinterachse an der linken Seite angeordnet ist, einem ersten Bremskreis BC1 zugeordnet. Eine dritte Radbremse RR, welche beispielsweise an einer Fahrzeughinterachse an der rechten Seite angeordnet ist, und eine vierte Radbremse FL, welche beispielsweise an der Fahrzeugvorderachse an der linken Seite angeordnet ist, sind einem zweiten Bremskreis BC2 zugeordnet. Jeder Radbremse RR, FL, FR, RL ist ein Einlassventil EV11, EV21, EV12, EV22 und ein Auslassventil AV11, AV21, AV12, AV22 zugeordnet, wobei über die Einlassventile EV11, EV21, EV12, EV22 jeweils Druck in der korrespondierenden Radbremse RR, FL, FR, RL aufgebaut werden kann, und wobei über die Auslassventile AV11, AV21, AV12, AV22 jeweils Druck in der korrespondierenden Radbremse RR, FL, FR, RL abgebaut werden kann. Zum Druckaufbau in der jeweiligen Radbremse RR, FL, FR, RL wird das korrespondierende Einlassventil EV11, EV12, EV21, EV22 geöffnet und das korrespondierende Auslassventil AV11, AV12, AV21, AV22 geschlossen. Zum Druckabbau in der jeweiligen Radbremse RR, FL, FR, RL wird das korrespondierende Einlassventil EV11, EV21, EV12, EV22 geschlossen und das korrespondierende Auslassventil AV11, AV21, AV12, AV22 geöffnet.

Wie aus Fig. 7 weiter ersichtlich ist, sind der ersten Radbremse FR ein erstes Einlassventil EV11 und ein erstes Auslassventil AV11 zugeordnet, der zweiten Radbremse RL sind ein zweites Einlassventil EV21 und ein zweites Auslassventil AV21 zugeordnet, der dritten Radbremse RR sind ein drittes Einlassventil EV12 und ein drittes Auslassventil AV12 zugeordnet und der vierten Radbremse FL sind ein viertes Einlassventil EV22 und ein viertes Auslassventil AV22 zugeordnet. Über die Einlassventile EV11, EV21, EV12, EV22 und die Auslassventile AV11, AV21, AV12, AV22 können Steuer- und/oder Regelvorgänge zur Umsetzung einer ABS-Funktion durchgeführt werden.

Zudem weist der erste Bremskreis BC1 ein erstes Ansaugventil HSV1, ein erstes Systemdruckstellventil USV1, einen ersten Ausgleichsbehälter A1 mit einem ersten Rückschlagventil RSV1 und eine erste Fluidpumpe PE1 auf. Der zweite Bremskreis BC2 weist ein zweites Ansaugventil HSV2, ein zweites Systemdruckstellventil USV2, einen zweiten Ausgleichsbehälter A2 mit einem zweiten Rückschlagventil RSV2 und eine zweite Fluidpumpe PE2 auf, wobei die erste und zweite Fluidpumpe PE1, PE2 von einem gemeinsamen Elektromotor M angetrieben werden. Des Weiteren umfasst die Hydraulikeinheit 9 zur Ermittlung des aktuellen Systemdrucks bzw. Bremsdrucks eine Sensoreinheit 9.1. Die Hydraulikeinheit 9 verwendet zur Bremsdruckmodulation und zur Umsetzung einer ASR-Funktion und/oder einer ESP-Funktion im ersten Bremskreis BC1 das erste Systemdruckstellventil USV1, das erste Ansaugventil HSV1 und die erste Rückförderpumpe PE1 und im zweiten Bremskreis BC2 das zweite Systemdruckstellventil USV2, das zweite Ansaugventil HSV2 und die zweite Rückförderpumpe PE2. Wie aus Fig. 7 weiter ersichtlich ist, ist jeder Bremskreis BC1, BC2 mit dem Hauptbremszylinder 5 verbunden, welcher über ein Bremspedal 3 betätigt werden kann. Zudem ist ein Fluidbehälter 7 mit dem Hauptbremszylinder 5 verbunden. Die Ansaugventile HSV1, HSV2 ermöglichen einen Eingriff in das Bremssystem, ohne dass ein Fahrerwunsch vorliegt. Hierzu wird über die Ansaugventile HSV1, HSV2 der jeweilige Saugpfad für die korrespondierende Fluidpumpe PE1, PE2 zum Hauptbremszylinder 5 geöffnet, so dass diese anstelle des Fahrers den benötigten Druck für die Regelung bereitstellen kann. Die Systemdruckstellventile USV1, USV2 sind zwischen dem Hauptbremszylinder 5 und mindestens einer zugeordneten Radbremse RR, FL, FR, RL angeordnet und stellen den Systemdruck bzw. Bremsdruck im zugehörigen Bremskreis BC1, BC2 ein. Wie aus Fig. 7 weiter ersichtlich ist, stellt ein erstes Systemdruckstellventil USV1 den Systemdruck bzw. Bremsdruck im ersten Bremskreis BC1 ein und ein zweites Systemdruckstellventil USV2 stellt den Systemdruck bzw. Bremsdruck im zweiten Bremskreis BC2 ein.

Wie aus Fig. 7 weiter ersichtlich ist, können die bistabilen Magnetventile 10, 10A an verschiedenen Positionen P1, P2, P3, P4, P5 in den jeweiligen Bremskreis BC1, BC2 eingeschleift werden. Bei den dargestellten Ausführungsbeispielen sind die verschiedenen Positionen P1, P2, P3, P4, P5 jeweils im zweiten Bremskreis BC2 bezeichnet. Wie aus Fig. 7 weiter ersichtlich ist, sind die bistabilen Magnetventile 10, 10A jeweils an einer ersten Position P1 zwischen dem korrespondierenden Systemdruckstellventil USV1, USV2 und den Einlassventilen EV11, EV12, EV21, EV22 vor einem Auslasskanal der korrespondierenden Fluidpumpe PE1, PE2 in den jeweiligen Bremskreis BC1, BC2 eingeschleift. Alternativ können die bistabilen Magnetventile 10, 10A jeweils an einer zweiten Position P2 zwischen dem Hauptbremszylinder 5 und dem korrespondierenden Systemdruckstellventil USV1, USV2 direkt vor dem korrespondierenden Systemdruckstellventil USV1, USV2 in den jeweiligen Bremskreis BC1, BC2 eingeschleift werden. Als weitere alternative Anordnung können die bistabilen Magnetventile 10, 10A jeweils an einer dritten Position P3 zwischen dem korrespondierenden Systemdruckstellventil USV1, USV2 und den Einlassventilen EV11, EV12, EV21, EV22 nach dem Auslasskanal der Fluidpumpe PE1, PE2 in den jeweiligen Bremskreis BC1, BC2 eingeschleift werden. Zudem können die bistabilen Magnetventile 10, 10A bei einer weiteren alternativen Anordnung jeweils an einer vierten Position P4 zwischen dem Hauptbremszylinder 5 und dem korrespondierenden Systemdruckstellventil USV1, USV2 im gemeinsamen Fluidzweig direkt nach dem Hauptbremszylinder 5 in den jeweiligen Bremskreis BC1, BC2 eingeschleift werden. Außerdem können die bistabilen Magnetventile 10, 10A jeweils an einer fünften Position P5 direkt vor einer zugeordneten Radbremse RR, FL, FR, RL in den jeweiligen Bremskreis BC1, BC2 eingeschleift werden.

Wie aus Fig. 7 weiter ersichtlich ist, wird im dargestellten Ausführungsbeispiel des hydraulischen Bremssystems 1 ein elektrischer Energiespeicher in Form eines Fahrzeugbordnetzes verwendet, um den in der mindestens einen zugeordneten Radbremse RR, FL, FR, RL in der stromlosen Geschlossenstellung des bistabilen Magnetventils 10, 10A eingeschlossenen Bremsdruck durch Nachfördern von Bremsfluid über die Fluidpumpe PE1, PE2 konstant zu halten. Da elektrische Energie nur zum Ventilschalten und für die kurze Nachförderfunktion erforderlich ist, ergibt sich nur ein geringer zusätzlicher elektrischer Energiebedarf für die Bremsdruckhaltefunktion. Alternativ können in einem nicht dargestellten Ausführungsbeispiel hydraulische Speichervorrichtungen verwendet werden, um den in der mindestens einen zugeordneten Radbremse RR, FL, FR, RL in der stromlosen Geschlossenstellung des bistabilen Magnetventils 10, 10A eingeschlossenen Bremsdruck durch Nachfördern von Bremsfluid konstant zu halten. Da elektrische Energie nur zum Ventilschalten erforderlich ist, jedoch quasi keine elektrische Energie für die Nachförderfunktion erforderlich ist, ergibt sich durch die hydraulischen Speichervorrichtungen ein noch geringerer elektrischer Energiebedarf für die Bremsdruckhaltefunktion.

Durch die beschriebenen Maßnahmen ist in vorteilhafter Weise ein Ausgleich eventuell vorhandener interner Leckage und Volumenausdehnungen möglich, welche beispielsweise aufgrund von Temperaturgang auftreten können. Zudem können die beschriebenen Maßnahmen kombiniert werden. Das bedeutet, dass die hydraulische Speichervorrichtung mit der elektrischen Speichervorrichtung kombiniert werden kann, um in der stromlosen Geschlossenstellung des bistabilen Magnetventils 10, 10A in der mindestens einen zugeordneten Radbremse RR, FL, FR, RL eingeschlossene Bremsdruck durch Nachförden von Bremsfluid über einen längeren Zeitraum konstant zu halten.

Wie aus Fig. 1 bis 6 weiter ersichtlich ist, weist der Ventilkörper 15 einen Aufnahmebereich 19 auf, welcher eine Führungsbaugruppe 40 zumindest teilweise aufnimmt. Die Führungsbaugruppe kann drehbeweglich oder drehfest im Aufnahmebereich 19 des Ventilkörpers 15 gelagert werden. Zudem ist die mechanische Rastvorrichtung 18 in den dargestellten Ausführungsbeispielen als Drehnockenmechanismus ausgeführt, welcher eine Umfangskraftkomponente nutzt, um eine Drehstellung zwischen dem Ventilanker 20 mit Schließelement 34 und der Führungsbaugruppe 40 zu verändern und den Ventilanker 20, 20A oder den Stößel 30 mit Schließelement 34 axial in die Raststellung hinein und wieder heraus zu bewegen, so dass der Ventilanker 20, 20A oder der Stößel 30 mit dem Schließelement 34 durch Anlegen eines Umschaltsignals an die Magnetbaugruppe zwischen den beiden stromlosen Stellungen wechseln kann. Die Führungsbaugruppe 40 ist in den dargestellten Ausführungsbeispielen drehbeweglich in einem Hinterschnitt 15.4 des Aufnahmebereichs 19 des Ventilkörpers 15 gelagert und liegt auf einer Auflage 17 auf. Zudem ist der Ventilanker 20, 20A in den dargestellten Ausführungsbeispielen an einer Innenwand der Führungshülse 13 drehfest geführt.

In den dargestellten Ausführungsbeispielen umfasst die Führungsbaugruppe 40 einen Steuerkäfig 41, welcher eine erste Durchgangsöffnung 41.1 und eine erste Führungsgeometrie 42 aufweist, und einen Steuerring 44, welcher eine zweite Durchgangsöffnung 44.1 und eine zweite Führungsgeometrie 45 aufweist. Der Steuerkäfig 41 und der Steuerring 44 sind im dargestellten Ausführungsbeispiel jeweils als Kunststoffteil ausgeführt und drehfest miteinander verbunden. Hierbei ist der Steuerring 44 in den Steuerkäfig 41 eingeführt und am Steuerring 44 ausgebildete Positionierungsnasen sind in korrespondierende am Steuerkäfig 41 ausgebildete Positionierungsaussparungen gefügt. Zudem kann der Steuerring 44 bei einem alternativen nicht dargestellten Ausführungsbeispiel als Stanz-Biege-Blechteil ausgeführt werden. Alternativ kann die Führungsbaugruppe 40 mit Steuerkäfig 41 und Steuerring 44 einteilig als Zweikomponentenkunststoffspritzgussteil ausgeführt werden.

Der Vorstufenanker 21 und der Hauptstufenanker 22, 22A des Ventilankers 20, 20A sind in den dargestellten Ausführungsbeispielen jeweils als gestufter Zylinder mit zwei verschiedenen Außendurchmessern ausgeführt. Hierbei weist ein in der mindestens einen Durchgangsöffnung 41.1, 44.1 der Führungsbaugruppe 40 geführter Abschnitt des Hauptstufenankers 22, 22A eine dritte Führungsgeometrie 28 auf, welche bei einer axialen Bewegung des Ventilankers 20, 20A in Richtung Polkern 11 mit der ersten Führungsgeometrie 42 des Steuerkäfigs 40 und bei einer axialen Bewegung des Ventilankers 20, 20A in Richtung Ventilsitz 15.1 mit der zweiten Führungsgeometrie 45 des Steuerrings 44 zusammenwirkt und eine Drehbewegung der Führungsbaugruppe 40 um eine gemeinsame Längsachse erzeugt. Der Hauptstufenanker 22, 22A ist durch einen außerhalb der Führungsbaugruppe 40 angeordneten Abschnitt des Grundkörpers 22 an einer Innenwand der Führungshülse 13 drehfest geführt. Bei einem alternativen nicht dargestellten Ausführungsbespiel kann die dritte Führungsgeometrie 28 bei einer axialen Bewegung des Ventilankers 20, 20A in Richtung Polkern 11 mit der ersten Führungsgeometrie 42 des Steuerkäfigs 40 und bei einer axialen Bewegung des Ventilankers 20, 20A in Richtung Ventilsitz 15.1 mit der zweiten Führungsgeometrie 45 des Steuerrings 44 zusammenwirkten und eine Drehbewegung des Ventilankers 20, 20A oder des Stößels 30 um eine gemeinsame Längsachse erzeugen, während die Führungsbaugruppe 40 drehfest im Ventilkörper 15 gelagert ist.

Die erste Führungsgeometrie 42 und die zweite Führungsgeometrie können beispielsweise jeweils als umlaufende Kulissenführung ausgebildet werden, in welchen eine als abstehendes und abgerundetes Positionierungselement 28.1 ausgeführte dritte Führungsgeometrie 28 zwischen einer Raststellung und einer Freigabestellung bewegt werden kann. Alternativ kann das Positionierungselement 28.1 mit einem eckigen, vorzugsweise mit einem dreieckigen Querschnitt ausgeführt werden, Das Positionierungselement 28.1 ist in eine Radialbohrung des Hauptstufenankers 22, 22A einpresst. Zudem kann das Positionierungselement 28.1 einstückig mit dem Hauptstufenankers 22, 22A ausgeführt werden, so dass auf den Einpressvorgang verzichtet werden kann. Das Positionierungselement 28.1 kann über eine im Steuerkäfig 41 angeordnete Einführaussparung ins Innere der Führungsbaugruppe 40 eingeführt werden und mit den Kulissenführungen zusammenwirken.

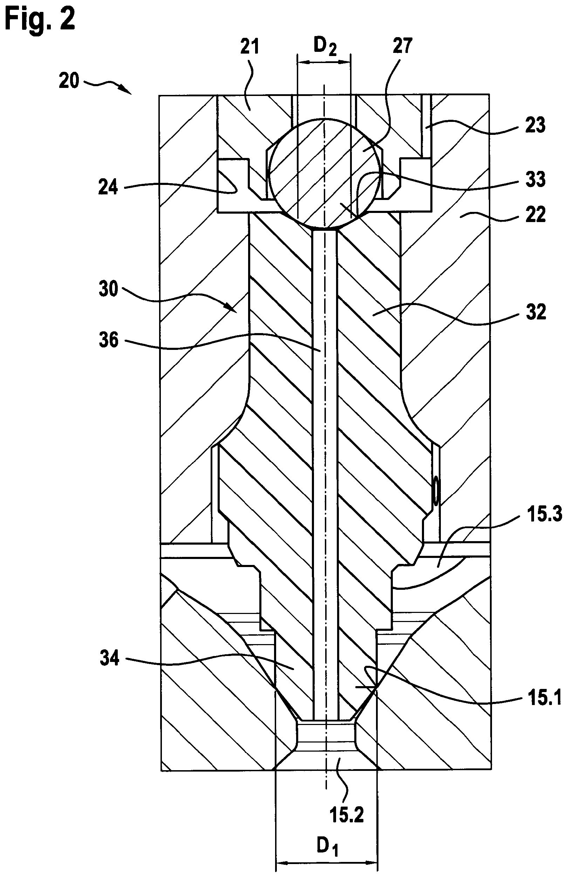

Wie aus Fig. 1 bis 6 weiter ersichtlich ist, weist der Hauptstufenanker 22, 22A an seinem dem Ventilsitz zugewandten Ende eine Stößelaufnahme 25 auf, in welche ein dem Polkern 11 zugewandtes Ende des Grundkörper 32 des Stößels 30 drehfest eingepresst ist. Am anderen Ende des Grundkörpers 32 ist das Schließelement 34 ausgebildet, welches die Spitze des Stößels 30 bildet und zur Ausübung der Dichtfunktion mit dem Ventilsitz 15.1 zusammenwirkt. Der Grundkörper 32 des Stößels 30 weist eine Durchgangsöffnung 36 auf, welche beispielsweise als Kanal oder Bohrung ausgeführt ist und die beiden Enden des Grundkörpers 32 fluidisch miteinander verbindet. Hierbei ist der Vorstufensitz 33 an dem, dem Polkern 11 zugewandten Ende des Stößels 30 angeordnet. Wie insbesondere aus Fig. 2 ersichtlich ist, ist ein erster Dichtdurchmesser D1 des Ventilsitzes 15.1 größer als ein zweiter Dichtdurchmesser D2 des Vorstufensitzes 33 ausgeführt. Im dargestellten Ausführungsbeispiel ist der Stößel 30 als Kunststoffspritzgussteil ausgeführt. Alternativ kann der Stößel 30 in einem PIM-, CIM- oder MIM-Verfahren oder als 3D-Druckteil hergestellt werden. Zusätzlich kann am Schließelement 34 ein Dichtelement angeordnet werden, welches die Dichtwirkung im Ventilsitz 15.1 verbessert. Das Dichtelement kann vorzugsweise als O-Ring-Dichtung ausgeführt werden. Zudem kann der Stößel 30 als Zweikomponentenkunststoffspritzgussteil ausgeführt werden, wobei der Bereich des Vorstufensitzes 33 aus einem Material mit größerer Elastizität besteht.

Wie aus Fig. 1 bis 6 weiter ersichtlich ist, weist der Hauptstufenanker 22, 22A an seinem dem Polkern 11 zugewandten Ende eine stufenförmige Vertiefung 24 auf, in welcher der stufenförmige Vorstufenanker 21 axialbeweglich gefügt ist. An einem dem Vorstufensitz 33 zugewandten Ende ist das Vorstufenschließelement 27 am Vorstufenanker 21 ausgebildet, welches zur Ausübung der Dichtfunktion mit dem Vorstufensitz 33 zusammenwirkt. Im dargestellten Ausführungsbeispiel ist das Vorstufenschließelement 27 als Kugel ausgeführt, welche in eine entsprechende Öffnung des Vorstufenankers 21 eingepresst ist. An seinem dem Polkern 11 zugewandten Ende weist der Vorstufenanker 21 eine Federaufnahme 26 auf, welche die Rückstellfeder 16 zumindest teilweise aufnimmt. Die Rückstellfeder 16 wirkt zwischen dem Vorstufenanker 21 und dem Polkern 11 und stützt sich an einem Ende auf einer dem Ventilanker 20, 20A zugewandten Polfläche des Polkerns 11 und am anderen Ende an einer Auflage in der Federaufnahme 26 ab. In einer alternativen nicht dargestellten Ausführungsform kann die Federaufnahme 26 auch im Polkern 11 eingebracht werden, so dass sich die Rückstellfeder 16 an der dem Polkern 11 zugewandten Stirnfläche des Vorstufenankers 21 und in der Federaufnahme 26 abstützt. Ein zwischen der Polfläche des Polkerns 11 und einer Polfläche des Ventilankers 20, 20A ausgebildeter Luftspalt 12 gibt einen maximal möglichen Ankerhub vor.

Wie aus Fig. 1 bis 6 weiter ersichtlich ist, ist zwischen dem Vorstufenanker 21 und dem Hauptstufenanker 22, 22A eine Druckausgleichsnut 23 ausgebildet, welche in den dargestellten Ausführungsbeispielen in den Vorstufenanker 21 eingebracht ist. Alternativ kann die Druckausgleichsnut 23 in den Hauptstufenanker 22, 22A oder sowohl in den Vorstufenanker 21 als auch in den Hauptstufenanker 22, 22A eingebracht werden.

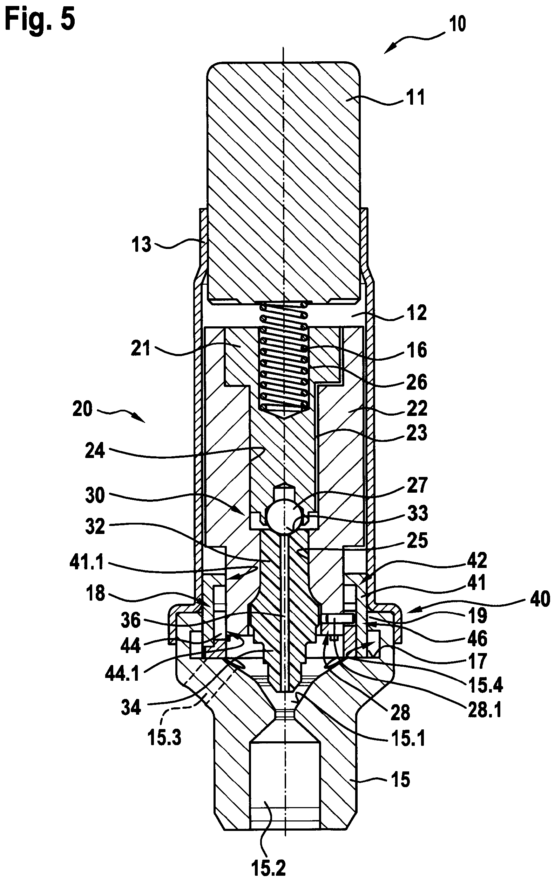

Nachfolgend wird der Bewegungsablauf des Ventilankers 20 mit Schließelement 34 ausgehend von der in Fig. 1 dargestellten stromlosen Geschlossenstellung in die in Fig. 5 dargestellte stromlose Offenstellung beschrieben.

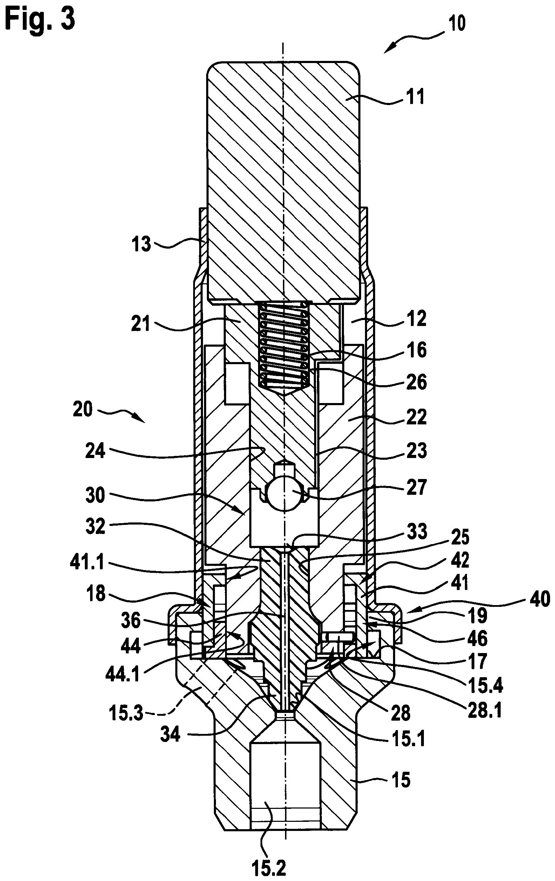

Fig. 1 zeigt die stromlose Geschlossenposition des Magnetventils 10. Die zwischen Polkern 11 und Vorstufenanker 21vorgespannte Rückstellfeder 16 drückt das Vorstufenschließelement 27 der Vorstufe in den Vorstufensitz 33 und das Schließelement 34 der Hauptstufe in den Ventilsitz 15.1. Das im Moment des Schließens herrschende Druckniveau im Magnetventil 10 und somit in den zugeordneten Radbremsen RR, FL, FR, RL wird gehalten. Der Druck unterhalb der Ventilsitze 33, 15.1 kann Richtung Reservoir abgebaut werden. Zum Öffnen wird die nicht dargestellte Magnetbaugruppe des Magnetventils 10 bestromt. Die auf den Vorstufenanker 21 sitzschließend wirkende Kraft ist wesentlich kleiner als die auf den Hauptstufenanker 22 wirkende sitzschließende Kraft, da die druckbeaufschlagte Fläche des Vorstufendichtsitzes 33 deutlich kleiner als die druckbeaufschlagte Fläche des Ventilsitzes 15.1 ist. Die Magnetkraft schließt deshalb zuerst den Luftspalt 12 zwischen Polkern 11 und dem ferromagnetischen Vorstufenanker 21. Wie aus Fig. 3 weiter ersichtlich ist, ist der Vorstufensitz 33 nun geöffnet und schafft über die Druckausgleichsnut 23 einen Druckausgleich zwischen der Hydraulik vor und nach dem Ventilsitz 15.1. Die Abmessungen des zylindrischen Bereichs am oberen Ende des Vorstufenankers 21 sind so gewählt, dass er auch bei maximaler Relativbewegung zwischen dem Hauptstufenanker 22 und dem Vorstufenanker 21 noch innerhalb der zugehörigen Vertiefung 24 des Hauptstufenankers 22 liegt. Dies hat eine Steigerung der Magnetkraft zur Folge. Es kann sinnvoll sein, den schlanken zylindrischen Bereich des Vorstufenankers 21 magnetisch vom Hauptstufenanker 22 zu isolieren, beispielsweise durch eine Beschichtung oder ein Zusatzbauteil.

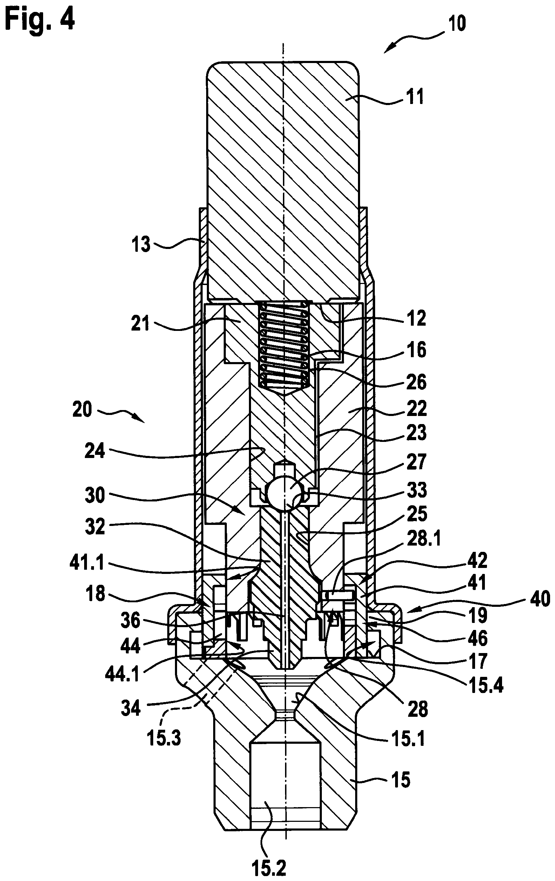

Fig. 4 zeigt weiterhin die bestromte Situation des Magnetventils 10. Nach erfolgtem Druckausgleich hat sich der Luftspalt 12 zwischen den ferromagnetischen Bauteilen Polkern 11 und Hauptstufenanker 22 geschlossen. Der Ventilanker 20 weist nun seinen maximalen Axialhub auf. Während der Axialbewegung in Richtung Polkern 11 hat der Hauptstufenanker 22 die Führungsbaugruppe 40 über die dritte Führungsgeometrie 28 und die erste Führungsgeometrie 42 des Steuerkäfigs 41 um einen vorgegebenen Winkel gedreht.

In Fig. 5 ist die stromlose Offenstellung des Magnetventils 10 Situation dargestellt. Die Rückstellfeder 16 hat den Vorstufenanker 21 in seinen Sitz im Hauptstufenanker 22 gedrückt. Der Hauptstufenanker 22 hat über die Steuermechanik für bistabiles Verhalten der Rastvorrichtung 18 seine Rastposition für die stromlose Offenstellung eingenommen. Das bedeutet, dass während der Axialbewegung in Richtung Ventilsitz 15.1 der Hauptstufenanker 22 die Führungsbaugruppe 40 über die dritte Führungsgeometrie 28 und die zweite Führungsgeometrie 46 des Steuerrings 44 um einen vorgegebenen Winkel in die Rastposition gedreht hat. In der Rastposition stützt sich der Hauptstufenanker 22 über die Führungsbaugruppe 40 axial ab und das Schließelement 34 gibt den Ventilsitz frei. Aus dieser stromlosen Offenstellung werden sich beim nächsten Schaltvorgang im Moment des Bestromens der Hauptstufenanker 22 und der Vorstufenanker 21 gemeinsam zum Polkernanschlag bewegen, da das Magnetventil 10 druckausgeglichen ist und es keine hydraulisch schließenden Kräfte gibt. Hierbei wiederholt sich das beschriebene Prinzip, dass sich die Führungsbaugruppe 40 gesteuert durch die Steuermechanik für bistabiles Verhalten bei jeder Axialbewegung des Hauptstufenankers 22 um einen vorgegebenen Winkel dreht, so dass sich danach die in Fig. 1 dargestellte stromlose Geschlossenstellung einstellt.

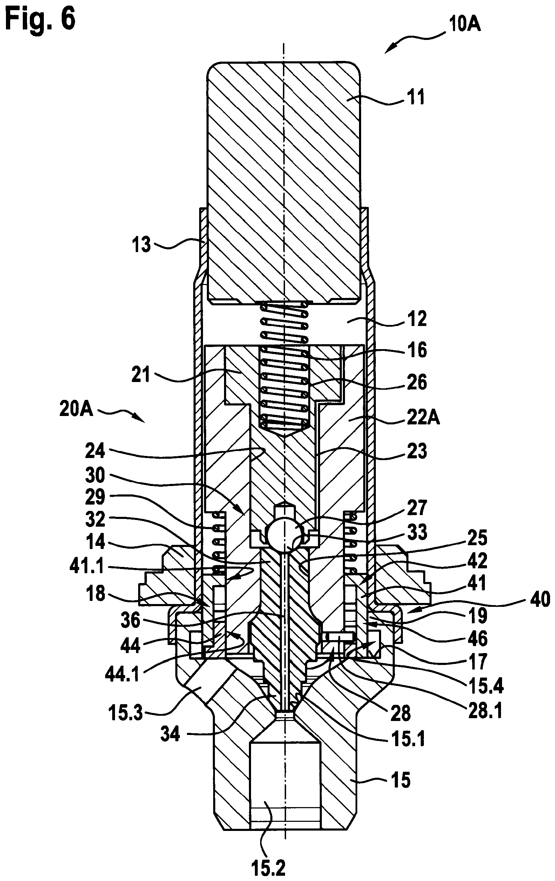

In Fig. 6 ist ein alternatives Ausführungsbeispiel des Magnetventils 10A dargestellt. Wie aus Fig. 6 weiter ersichtlich ist, weist das dargestellte Magnetventil 10A im Unterschied zum Magnetventil 10 eine Hauptstufenfeder 29 auf, welche den Hauptstufenanker 22A in Richtung Polkern 11 bewegt. Hierbei ist die Federkraft der Hauptstufenfeder 29 kleiner als die Federkraft der Rückstellfeder 16 gewählt. Die hier zusätzlich verwendete Hauptstufenfeder 29 unter dem Hauptstufenanker 22A wirkt der Rückstellfeder 16 entgegen. Die Hauptstufenankerfeder 22A hebt den Hauptstufenanker 22A in der in Fig. 3 dargestellten bestromten Situation an, wenn der Vorstufenanker 21 bereits geöffnet und somit der Druckausgleich hergestellt ist. Dadurch werden der Luftspalt 12 zwischen Hauptstufenanker 22A und Polkern 11 und somit auch der Magnetkraftbedarf reduziert.

Bei der oben beschriebenen Lösung können sich ohne Funktionsnachteil sowohl die Führungsbaugruppe 40 als auch der Ventilanker 20, 20A oder beide drehen, je nachdem wo weniger Reibung zu überwinden ist. Um gezielt nur die Bewegung einer Baugruppe zuzulassen kann entweder die Führungsbaugruppe 40 fest anstatt drehbeweglich im Ventilkörper 15 befestigt werden oder es kann ein Verdrehschutz für den Ventilanker 20, 20A vorgesehen werden. Ein solcher Verdrehschutz kann beispielsweise durch einen Formschluss des Ventilankers 20, 20A mit der Führungshülse 13 oder mit dem Polkern 11 umgesetzt werden.

## Patentansprüche

1. Magnetventil (10, 10A) für ein hydraulisches Bremssystem (1), mit einer Magnetbaugruppe, einem Polkern (11), einer mit dem Polkern (11) verbundenen Führungshülse (13), einem innerhalb der Führungshülse (13) axial beweglich geführten Ventilanker (20, 20A), welcher von einer durch die Magnetbaugruppe erzeugten Magnetkraft gegen die Kraft einer Rückstellfeder (16) oder durch die Kraft der Rückstellfeder (16) antreibbar ist und einen Stößel (30) mit einem Schließelement (34) axial bewegt, und einem mit der Führungshülse (13) verbundenen Ventilkörper (15) mit einem Ventilsitz (15.1), welcher zwischen mindestens einer ersten Strömungsöffnung (15.2) und mindestens einer zweiten Strömungsöffnung (15.3) angeordnet ist, wobei der Ventilanker (20, 20A) oder der Stößel (30) in mindestens einer Durchgangsöffnung (41.1, 44.1) einer Führungsbaugruppe (40) axial geführt ist, **dadurch gekennzeichnet, dass** zwischen der Führungsbaugruppe (40) und dem Ventilanker (20, 20A) oder dem Stößel (30) eine mechanische Rastvorrichtung (18) ausgebildet ist, welche den Ventilanker (20, 20A) oder den Stößel (30) in einer stromlosen Geschlossenstellung freigibt, so dass die Rückstellfeder (16) den Ventilanker (20, 20A) antreibt und das Schließelement (34) zur Ausführung einer Dichtfunktion dichtend in den Ventilsitz (15.1) drückt, und den Ventilanker (20, 20A) oder den Stößel (30) in einer stromlosen Offenstellung gegen die Kraft der Rückstellfeder (16) in einer axialen Raststellung so festlegt, dass das Schließelement (34) vom Ventilsitz (15.1) abgehoben ist, wobei der Ventilanker (20, 20A) einen Hauptstufenanker (22, 22A) mit einer druckbeaufschlagten ersten Fläche und einen Vorstufenanker (21) mit einer kleineren druckbeaufschlagten zweiten Fläche umfasst, welcher axial beweglich im Hauptstufenanker (22, 22A) gelagert ist und über ein Vorstufenschließelement (27) mit einem Vorstufensitz (33) zusammenwirkt.

2. Magnetventil nach Anspruch 1, **dadurch gekennzeichnet, dass** der Ventilkörper (15) einen Aufnahmebereich (19) aufweist, welcher die Führungsbaugruppe (40) zumindest teilweise aufnimmt, wobei die Führungsbaugruppe (40) drehbeweglich oder drehfest im Aufnahmebereich (19) des Ventilkörpers (15) gelagert ist.

3. Magnetventil nach Anspruch 1 oder 2, **dadurch gekennzeichnet, dass** die mechanische Rastvorrichtung (18) als Drehnockenmechanismus ausgeführt ist, welcher eine Umfangskraftkomponente nutzt, um eine Drehstellung zwischen dem Ventilanker (20, 20A) oder dem Stößel (30) mit Schließelement (34) und der Führungsbaugruppe (40) zu verändern und den Ventilanker (20, 20A) oder den Stößel (30) mit Schließelement (34) axial in die Raststellung hinein und wieder heraus zu bewegen, so dass der Ventilanker (20, 20A) oder der Stößel (30) mit dem Schließelement (34) durch Anlegen eines Umschaltsignals an die Magnetbaugruppe zwischen den beiden stromlosen Stellungen wechselt.

4. Magnetventil nach einem der Ansprüche 1 bis 3, **dadurch gekennzeichnet, dass** die Rückstellfeder (16) zwischen dem Vorstufenanker (21) und dem Polkern (11) wirkt.

5. Magnetventil nach einem der Ansprüche 1 bis 4, **dadurch gekennzeichnet, dass** eine Hauptstufenfeder (29) den Hauptstufenanker (22A) in Richtung Polkern (11) bewegt, wobei die Federkraft der Hauptstufenfeder (29) kleiner als die Federkraft der Rückstellfeder (16) ist.

6. Magnetventil nach einem der Ansprüche 1 bis 5, **dadurch gekennzeichnet, dass** ein Grundkörper (32) des Stößels (30) eine Durchgangsöffnung (36) aufweist, welche die beiden Enden des Grundkörpers (32) fluidisch miteinander verbindet, wobei an einem dem Polkern (11) zugewandten Ende der Vorstufensitz (33) und an einem dem Ventilsitz (15.1) zugewandten Ende das Schließelement (34) angeordnet ist.

7. Magnetventil nach Anspruch 6, **dadurch gekennzeichnet, dass** der Stößel als Zweikomponentenkunststoffspritzgussteil ausgeführt ist, wobei der Bereich des Vorstufensitzes (33) aus einem Material mit größerer Elastizität besteht.

8. Magnetventil nach einem der Ansprüche 1 bis 7, **dadurch gekennzeichnet, dass** ein erster Dichtdurchmesser (D1) des Ventilsitzes (15.1) größer als ein zweiter Dichtdurchmesser (D2) des Vorstufensitzes (33) ist.

9. Magnetventil nach einem der Ansprüche 1 bis 8, **dadurch gekennzeichnet, dass** zwischen dem Vorstufenanker (21) und dem Hauptstufenanker (22, 22A) eine Druckausgleichsnut (23) ausgebildet ist.

10. Magnetventil nach einem der Ansprüche 1 bis 9, **dadurch gekennzeichnet, dass** der Vorstufenanker (21) unabhängig vom Ankerhub in einer Vertiefung (24) des Hauptstufenankers (22, 22A) geführt ist.

11. Magnetventil nach einem der Ansprüche 1 bis 10, **dadurch gekennzeichnet, dass** der Vorstufenanker (21) magnetisch vom Hauptstufenanker (22, 22A) isoliert ist.

12. Magnetventil nach einem der Ansprüche 1 bis 11, **dadurch gekennzeichnet, dass** die Führungsbaugruppe (40) einen Steuerkäfig (41), welcher eine erste Durchgangsöffnung (41.1) und eine erste Führungsgeometrie (42) aufweist, und einen Steuerring (44) umfasst, welcher eine zweite Durchgangsöffnung (44.1) und eine zweite Führungsgeometrie (45) aufweist.

13. Magnetventil nach Anspruch 12, **dadurch gekennzeichnet, dass** der Ventilanker (20, 20A) oder der Stößel (30) an einem in der mindestens einen Durchgangsöffnung (41.1, 44.1) der Führungsbaugruppe (40) geführten Abschnitt eine dritte Führungsgeometrie (28) aufweist, welche bei einer axialen Bewegung des Ventilankers (20, 20A) in Richtung Polkern (11) mit der ersten Führungsgeometrie (42) des Steuerkäfigs (40) und bei einer axialen Bewegung des Ventilankers (20, 20A) in Richtung Ventilsitz (15.1) mit der zweiten Führungsgeometrie (45) des Steuerrings (44) zusammenwirkt und eine Drehbewegung des Ventilankers (20, 20A) oder des Stößels (30) und/oder der Führungsbaugruppe (40) um eine gemeinsame Längsachse erzeugt.

14. Hydraulisches Bremssystem (1) für ein Fahrzeug, mit einem Hauptbremszylinder (5), einer Hydraulikeinheit (9) und mehreren Radbremsen (RR, FL, FR, RL), wobei die Hydraulikeinheit (9) mindestens zwei Bremskreise (BC1, BC2) zur Bremsdruckmodulation in den Radbremsen (RR, FL, FR, RL) umfasst, **dadurch gekennzeichnet, dass** die mindestens zwei Bremskreise (BC1, BC2) jeweils mindestens ein bistabiles Magnetventil (10) aufweisen, welches nach zumindest einem der Ansprüche 1 bis 13 ausgeführt ist und in der stromlosen Offenstellung die Bremsdruckmodulation in mindestens einer zugeordneten Radbremse (RR, FL, FR, RL) freigibt und in der stromlosen Geschlossenstellung einen aktuellen Bremsdruck in der mindestens einen zugeordneten Radbremse (RR, FL, FR, RL) einschließt.

## Claims

1. Solenoid valve (10, 10A) for a hydraulic brake system (1), having a solenoid assembly, having a pole core (11), having a guide sleeve (13) connected to the pole core (11), having a valve armature (20, 20A) which is guided in axially movable fashion within the guide sleeve (13) and which can be driven counter to the force of a resetting spring (16) by a magnet force generated by the solenoid assembly or can be driven by the force of the resetting spring (16) and which axially moves a plunger (30) with a closing element (34), and having a valve body (15) which is connected to the guide sleeve (13) and which has a valve seat (15.1) which is arranged between at least one first flow opening (15.2) and at least one second flow opening (15.3), wherein the valve armature (20, 20A) or the plunger (30) is guided axially in at least one passage opening (41.1, 44.1) of a guide assembly (40), **characterized in that** a mechanical detent device (18) is formed between the guide assembly (40) and the valve armature (20, 20A) or the plunger (30), which mechanical detent device, in an electrically deenergized closed position, releases the valve armature (20, 20A) or the plunger (30) such that the resetting spring (16) drives the valve armature (20, 20A) and pushes the closing element (34) sealingly into the valve seat (15.1) in order to perform a sealing function, and, in an electrically deenergized open position, fixes the valve armature (20, 20A) or the plunger (30), counter to the force of the resetting spring (16), in an axial detent position such that the closing element (34) is lifted off from the valve seat (15.1), wherein the valve armature (20, 20A) comprises a main stage armature (22, 22A) with a first pressure-loaded surface and comprises a pilot stage armature (21) with a smaller second pressure-loaded surface, which pilot stage armature is mounted in axially movable fashion in the main stage armature (22, 22A) and interacts via a pilot stage closing element (27) with a pilot stage seat (33).

2. Solenoid valve according to Claim 1, **characterized in that** the valve body (15) has a receiving region (19) which at least partially receives the guide assembly (40), wherein the guide assembly (40) is mounted in rotationally movable or rotationally fixed fashion in the receiving region (19) of the valve body (15).

3. Solenoid valve according to Claim 1 or 2, **characterized in that** the mechanical detent device (18) is designed as a rotary cam mechanism which utilizes a circumferential force component in order to vary a rotational position between the valve armature (20, 20A) or the plunger (30) with closing element (34) and the guide assembly (40) and in order to move the valve armature (20, 20A) or the plunger (30) with closing element (34) axially into the detent position and out of said detent position again, such that the valve armature (20, 20A) or the plunger (30) with the closing element (34) switches between the two electrically deenergized positions as a result of application of a switching signal to the solenoid assembly.

4. Solenoid valve according to any of Claims 1 to 3, **characterized in that** the resetting spring (16) acts between the pilot stage armature (21) and the pole core (11).

5. Solenoid valve according to any of Claims 1 to 4, **characterized in that** a main stage spring (29) moves the main stage armature (22A) in the direction of the pole core (11), wherein the spring force of the main stage spring (29) is lower than the spring force of the resetting spring (16).

6. Solenoid valve according to any of Claims 1 to 5, **characterized in that** a main body (32) of the plunger (30) has a passage opening (36) which fluidically connects the two ends of the main body (32) to one another, wherein the pilot stage seat (33) is arranged at an end facing toward the pole core (11), and the closing element (34) is arranged at an end facing toward the valve seat (15.1).

7. Solenoid valve according to Claim 6, **characterized in that** the plunger is designed as a two-component plastics injection-moulded part, wherein the region of the pilot stage seat (33) is composed of a material with relatively high elasticity.

8. Solenoid valve according to any of Claims 1 to 7, **characterized in that** a first sealing diameter (D1) of the valve seat (15.1) is greater than a second sealing diameter (D2) of the pilot stage seat (33).

9. Solenoid valve according to any of Claims 1 to 8, **characterized in that** a pressure equalizing groove (23) is formed between the pilot stage·armature (21) and the main stage armature (22, 22A).

10. Solenoid valve according to any of Claims 1 to 9, **characterized in that** the pilot stage armature (21) is guided in a depression (24) of the main stage armature (22, 22A) irrespective of the armature stroke.

11. Solenoid valve according to any of Claims 1 to 10, **characterized in that** the pilot stage armature (21) is magnetically insulated from the main stage armature (22, 22A).

12. Solenoid valve according to any of Claims 1 to 11, **characterized in that** the guide assembly (40) has a control cage (41), which has a first passage opening (41.1) and a first guide geometry (42), and a control ring (44), which has a second passage opening (44.1) and a second guide geometry (45).

13. Solenoid valve according to Claim 12, **characterized in that** the valve armature (20, 20A) or the plunger (30) has, on a portion which is guided in the at least one passage opening (41.1, 44.1) of the guide assembly (40), a third guide geometry (28) which interacts with the first guide geometry (42) of the control cage (40) during an axial movement of the valve armature (20, 20A) in the direction of the pole core (11) and which interacts with the second guide geometry (45) of the control ring (44) during an axial movement of the valve armature (20, 20A) in the direction of the valve seat (15.1) and which generates a rotational movement of the valve armature (20, 20A) or of the plunger (30) and/or of the guide assembly (40) about a common longitudinal axis.

14. Hydraulic brake system (1) for a vehicle, having a master brake cylinder (5), having a hydraulics unit (9) and having multiple wheel brakes (RR, FL, FR, RL), wherein the hydraulics unit (9) comprises at least two brake circuits (BC1, BC2) for brake pressure modulation in the wheel brakes (RR, FL, FR, RL), **characterized in that** the at least two brake circuits (BC1, BC2) each have at least one bistable solenoid valve (10) which is designed according to at least one of Claims 1 to 13 and which, in the electrically deenergized open position, enables the brake pressure modulation in at least one associated wheel brake (RR, FL, FR, RL) and, in the electrically deenergized closed position, encloses a present brake pressure in the at least one associated wheel brake (RR, FL, FR, RL).

## Revendications

1. Soupape électromagnétique (10, 10A) pour un système de freinage hydraulique (1), comprenant un module magnétique, un noyau polaire (11), une douille de guidage (13) connectée au noyau polaire (11), un induit de soupape (20, 20A) guidé de manière déplaçable axialement à l'intérieur de la douille de guidage (13), qui peut être entraîné par une force magnétique générée par le module magnétique à l'encontre de la force d'un ressort de rappel (16), ou par la force du ressort de rappel (16), et qui déplace axialement un poussoir (30) avec un élément de fermeture (34), et un corps de soupape (15) connecté à la douille de guidage (13) avec un siège de soupape (15.1), lequel est disposé entre au moins une première ouverture d'écoulement (15.2) et au moins une deuxième ouverture d'écoulement (15.3), l'induit de soupape (20, 20A) ou le poussoir (30) étant guidé axialement dans au moins une ouverture de passage (41.1, 44.1) d'un module de guidage (40), **caractérisée en ce qu'**entre le module de guidage (40) et l'induit de soupape (20, 20A) ou le poussoir (30) est réalisé un dispositif d'encliquetage mécanique (18) qui libère l'induit de soupape (20, 20A) ou le poussoir (30) dans une position fermée non alimentée en courant, de telle sorte que le ressort de rappel (16) entraîne l'induit de soupape (20, 20A) et presse l'élément de fermeture (34) hermétiquement dans le siège de soupape (15.1) pour réaliser une fonction d'étanchéité, et fixe l'induit de soupape (20, 20A) ou le poussoir (30) dans une position ouverte non alimentée en courant à l'encontre de la force du ressort de rappel (16) dans une position d'encliquetage axiale de telle sorte que l'élément de fermeture (34) soit soulevé du siège de soupape (15.1), l'induit de soupape (20, 20A) comprenant un induit d'étage principal (22, 22A) avec une première surface sollicitée par pression et un induit d'étage préliminaire (21) avec une deuxième surface plus petite sollicitée par pression qui est supporté de manière déplaçable axialement dans l'induit d'étage principal (22, 22A) et qui coopère avec un siège d'étage préliminaire (33) par le biais d'un élément de fermeture d'étage préliminaire (27).

2. Soupape électromagnétique selon la revendication 1, **caractérisée en ce que** le corps de soupape (15) présente une région de réception (19) qui reçoit au moins en partie le module de guidage (40), le module de guidage (40) étant supporté de manière déplaçable en rotation ou de manière fixée en rotation dans la région de réception (19) du corps de soupape (15).

3. Soupape électromagnétique selon la revendication 1 ou 2, **caractérisée en ce que** le dispositif d'encliquetage mécanique (18) est réalisé sous forme de mécanisme à came rotative qui utilise une composante de force périphérique pour modifier une position de rotation entre l'induit de soupape (20, 20A) ou le poussoir (30) avec l'élément de fermeture (34) et le module de guidage (40) et pour déplacer l'induit de soupape (20, 20A) ou le poussoir (30) avec l'élément de fermeture (34) axialement dans la position d'encliquetage et à nouveau hors de celle-ci, de telle sorte que l'induit de soupape (20, 20A) ou le poussoir (30) avec l'élément de fermeture (34), par application d'un signal de commutation au niveau du module magnétique, commute entre les deux positions non alimentées en courant.

4. Soupape électromagnétique selon l'une quelconque des revendications 1 à 3, **caractérisée en ce que** le ressort de rappel (16) agit entre l'induit d'étage préliminaire (21) et le noyau polaire (11) .

5. Soupape électromagnétique selon l'une quelconque des revendications 1 à 4, **caractérisée en ce qu'**un ressort d'étage principal (29) déplace l'induit d'étage principal (22A) dans la direction du noyau polaire (11), la force de ressort du ressort d'étage principal (29) étant inférieure à la force de ressort du ressort de rappel (16).

6. Soupape électromagnétique selon l'une quelconque des revendications 1 à 5, **caractérisée en ce qu'**un corps de base (32) du poussoir (30) présente une ouverture de passage (36) qui relie l'une à l'autre fluidiquement les deux extrémités du corps de base (32), le siège d'étage préliminaire (33) étant disposé au niveau d'une extrémité tournée vers le noyau polaire (11) et l'élément de fermeture (34) étant disposé au niveau d'une extrémité tournée vers le siège de soupape (15.1).

7. Soupape électromagnétique selon la revendication 6, **caractérisée en ce que** le poussoir est réalisé sous forme de pièce moulée par injection de plastique à deux composants, la région du siège d'étage préliminaire (33) se composant d'un matériau ayant une plus grande élasticité.

8. Soupape électromagnétique selon l'une quelconque des revendications 1 à 7, **caractérisée en ce qu'**un premier diamètre d'étanchéité (D1) du siège de soupape (15.1) est supérieur à un deuxième diamètre d'étanchéité (D2) du siège d'étage préliminaire (33).

9. Soupape électromagnétique selon l'une quelconque des revendications 1 à 8, **caractérisée en ce qu'**entre l'induit d'étage préliminaire (21) et l'induit d'étage principal (22, 22A) est réalisée une rainure d'équilibrage de la pression (23).

10. Soupape électromagnétique selon l'une quelconque des revendications 1 à 9, **caractérisée en ce que** l'induit d'étage préliminaire (21) est guidé indépendamment de la course d'induit dans un renfoncement (24) de l'induit d'étage principal (22, 22A).

11. Soupape électromagnétique selon l'une quelconque des revendications 1 à 10, **caractérisée en ce que** l'induit d'étage préliminaire (21) est isolé magnétiquement de l'induit d'étage principal (22, 22A) .

12. Soupape électromagnétique selon l'une quelconque des revendications 1 à 11, **caractérisée en ce que** le module de guidage (40) comprend une cage de commande (41) qui présente une première ouverture de passage (41.1) et une première géométrie de guidage (42), et comprend une bague de commande (44) qui présente une deuxième ouverture de passage (44.1) et une deuxième géométrie de guidage (45).

13. Soupape électromagnétique selon la revendication 12, **caractérisée en ce que** l'induit de soupape (20, 20A) ou le poussoir (30) présente une troisième géométrie de guidage (28) au niveau d'une portion guidée dans l'au moins une ouverture de passage (41.1, 44.1) du module de guidage (40), laquelle, dans le cas d'un déplacement axial de l'induit de soupape (20, 20A) dans la direction du noyau polaire (11), coopère avec la première géométrie de guidage (42) de la cage de commande (40), et dans le cas d'un déplacement axial de l'induit de soupape (20, 20A) dans la direction du siège de soupape (15.1), coopère avec la deuxième géométrie de guidage (45) de la bague de commande (44) et génère un mouvement de rotation de l'induit de soupape (20, 20A) ou du poussoir (30) et/ou du module de guidage (40) autour d'un axe longitudinal commun.

14. Système de freinage hydraulique (1) pour un véhicule, comprenant un cylindre de frein principal (5), une unité hydraulique (9) et plusieurs freins de roues (RR, FL, FR, RL), l'unité hydraulique (9) comprenant au moins deux circuits de freinage (BC1, BC2) pour la modulation de la pression de freinage dans les freins de roues (RR, FL, FR, RL), **caractérisé en ce que** les au moins deux circuits de freinage (BC1, BC2) présentent chacun au moins une soupape électromagnétique bistable (10) qui est réalisée selon au moins l'une des revendications 1 à 13, et qui, dans la position ouverte non alimentée en courant, libère la modulation de pression de freinage dans au moins un frein de roue associé (RR, FL, FR, RL) et, dans la position fermée non alimentée en courant, renferme une pression de freinage actuelle dans l'au moins un frein de roue associé (RR, FL, FR, RL).
